# EUROPEAN PATENT SPECIFICATION

(11) **EP 0 885 518 B1**
(45) Date of publication and mention of the grant of the patent: **29.06.2005**
(21) Application number: 97902389.2
(22) Date of filing: 07.02.1997
(51) Int. Cl.: H04M 15/00

(54) **METHOD TO ARRANGE A PAYMENT SERVICE IN A TELECOMMUNICATIONS NETWORK**
VERFAHREN ZUR ANORDNUNG EINES ZAHLDIENSTES IN EINEM FERNMELDENETZ
PROCEDE PERMETTANT D'ORGANISER DES SERVICES A PEAGE DANS UN RESEAU DE TELECOMMUNICATIONS

(30) Priority: 19.02.1996 FI 960746
(43) Date of publication of application: 23.12.1998
(73) Proprietor: TeliaSonera Finland Oyj, 00510 Helsinki (FI)
(72) Inventor: ÄRMÄNEN, Matti, FIN-02601 Espoo (FI)
(74) Representative: Simmelvuo, Markku Kalevi
(86) International application number: PCT/FI1997/000075
(87) International publication number: WO 1997/030543

(56) References cited:
- EP-A2- 0 698 987
- WO-A1-96/36192
- DE-A1- 4 412 727
- US-A- 5 301 223
- US-A- 5 321 735

## Description

The invention relates to a method to arrange a real-time payment service in a telecommunications network is in accordance with the preamble of the claim I.

A generally well-known method of charging for a service provided via a telenetwork is to arrange a service number, impulses of which are charged at fixed rate. The number of impulses is then registered and the call is charged to the caller's bill in line with the impulse tariff above.

The problem with billing for services provided via a telenetwork in this way is that the bill is passed on to the customer via the telecommunications operator. The telecommunications operator bills the customer and pays the proceeds from the service number into the account of the owner of the number.

One of the drawbacks with this method of billing for services provided by service numbers is that it is based entirely on the telephone number and the telephone line belonging to it. This being the case, it is not necessarily callers of service numbers themselves who have to pay for the calls, but the person or company to whom the telephone bills are sent, the person or company in whose name the line is. The risk of abuse is obvious. A further drawback is that it is the telecommunications operator who bears the credit risk, not the service provider. Yet another drawback is the limited scope of the amount charged as an impulse charge.

Prior art includes US 5,301,223 describing a method and apparatus for use in a mobile telephone rental system in which credit card information is communicated between a mobile telephone unit and a Voice Response System for customer registration and remote programming of mobile telephone unit features and NAM settings.

Prior art further includes US 5,321,735 describing a method and apparatus for selective real time authorization and billing of calls in a public telepoint system which method, in a base station providing communications within a coverage area for authorizing and processing calls initiated by portable communication units, whereby the base station is coupled to a network control center, comprises receiving registration information, including a value indicating a type of portable communication unit, from a portable communication unit.

Prior art further includes EP-A-0 698 987 A describing a method of dealing with accounts for subscribers to a telephone system. With the use of mobile telephone handsets such as in the cellular telephone system, subscribers may not be easy to reach, and the conventional rendering of accounts or invoices to a subscriber may not prove effective. The method of subscriber accounting in a telephony system, comprises storing and updating subscriber prepayments on a subscriber account at a centralised billing location, monitoring subscriber calls and levying charges therefor against the subscriber account, and transmitting information relating to the subscriber's account to the subscriber.

However, none of the above prior art allows charging customers directly for services provided via a telecommunication network, with no need for a telecommunications operator to act as a middleman for making a payment from a customer to a service provider.

The object of the invention is to simplify and improve the method of charging for service numbers provided via a telenetwork. The features disclosed in the characterizing part of the claim I are essential to the method to arrange a real-time payment service in a telenetwork according to the invention.

The invention is based on a method to arrange a real-time payment service in a telenetwork, whereby customers can be charged direct in real time for chargeable services provided via a telecommunications network. This method is arranged to be implemented in a telenetwork comprising an intelligent network, which includes a service switching point, to which the customer's call is directed and where the service provided by the service number is identified by number. The invention is based on a payment service point being set up in the service switching point in the intelligent network to identify a customer calling a service number and to determine the cost of the call. The payment service point is arranged to function as a payment terminal so that the account or similar numbers of the customer and service provider are forwarded to a payment service linked to the telenetwork in a dedicated network. The payment service makes transactions by making a direct payment from the customer's account to an account specified by the service provider when the call is made. This payment depends on the price of the service number concerned.

When the cost of a call is already known (i.e. call specific charging), payment for a service via the payment service point can be made before the call is directed to the service number, or when the call to the number has already begun (i.e. payment during a call once the cost of it has been obtained from the service provider) or once a call has ended (i.e. where the charge depends on call length).

One advantage of the invention is that customers can now be charged direct for service calls, the most expedient way being from an account in a financial institution or similar place of deposit such as a debit or credit card account. The telecommunications operator no longer acts as a middleman when payment is made from the customer to the service provider. Another advantage of the invention is that it is a simple, effective way of dealing with payments between a customer and the service provider using service numbers.

The following describes the invention in detail with reference to the diagrams enclosed where
- Figure 1: shows in block diagram form the components and systems associated with the payment service;
- Figure 2: shows the payment service system in flowchart form, which also payment can be dealt with in the alternative operational points C, D and E, in the chart; and
- Figure 3: shows payment of the transaction in the payment service unit in flowchart form.

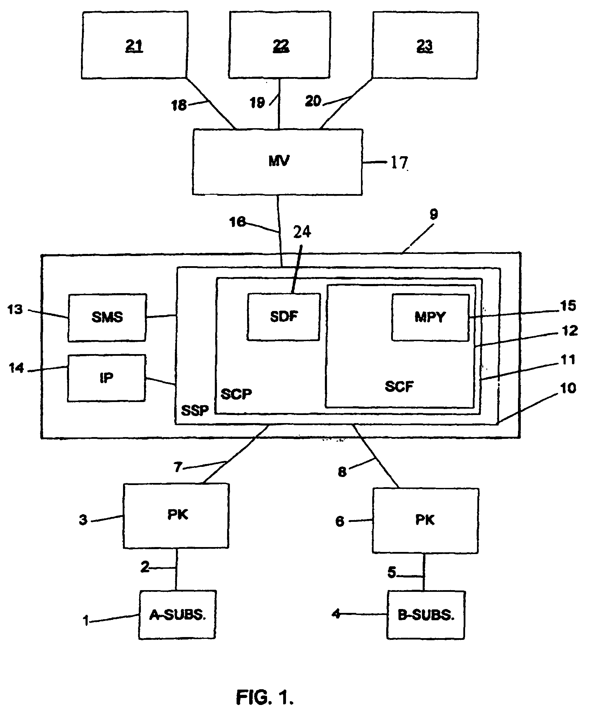

Customer 1, in other words subscriber A, who has a compatible terminal, such as a telephone fitted with tone frequency dial signaling (DTMF signaling / structure regulations of telephone networks in Finland), has been connected by subscriber cable 2 to a subscriber interface in the local exchange (PK) 3. Similarly service provider 4 or a B-subscriber, which has its own terminal fitted most preferably with tone frequency dial signaling has been connected by subscriber cable 5 to another subscriber interface in local exchange (PK) 6. Local exchanges 3 and 6 have been connected by gateways 7 and 8 (either directly as shown in figure 1, or hierarchically via one or more higher exchanges) to intelligent network (IN) 9 especially to a service switching point (SSP) 10 thereof. In this embodiment the local exchanges 3 and 6 are connected to the service switching point 10 by means of a PCM gateway 7, 8 and TUP signaling (TUP protocol is described among others in the document "Kansallinen Yhteiskanavamerkinantojärjestelmä, Puhelinkäyttäjäosa TUP, Posti- ja telehallitus, Puhelinlaitosten Liitto r.y. Helsinki 1988").

An intelligent network IN is a communications or telecommunications network intended among other things to implement new telecommunications services and to make them available to customers. By means of the intelligent network implementation of telecommunications services can be arranged to be independent of the supplier of the telecommunications network. CCITT (International Telegraph and Telephone Consultative Committee) has defined the conceptual model of an intelligent network, its physical components, functional units and interfaces. The functions required by telecommunications services have been centralized into special intelligent network components through which all connections relating to services are dealt with.

According to CCITT's definition, the intelligent network includes the following physical components and functional units relating thereto: a service switching point (Service Switching Point SSP), a service control point (Service Control Point SCP), a service management system (Service Management System SMS) and possibly an intelligent peripheral or peripheral computer (Intelligent Peripheral IP). In addition to the components listed, the intelligent network may also include other components. With respect to construction and function of the intelligent network, we refer to, for example, report 2 of the Department of Information Technology at Lappeenranta University of Technology: "The Third Summer School on Telecommunications IFIP TC 6 Workshop on Intelligent Networks, August 8-9, 1994; Tutorial on Intelligent Networks".

The intelligent network 9 is connected via a switching centre 10 to a public telephone network or to a corresponding communications network, such as to local exchanges 3 and 4 of the public telephone network as shown in the drawing. In the service switching point 10 is identified the intelligent network service required by the customer or need for the service linked to the intelligent network and the request is messaged to the other components of the intelligent network 9. In the service switching point 10 are located among other things a service switching function (Service Switching Function SSF) and a set of call control functions (Call Control Function CCF, Call Control Agent Function CCAF). The intelligent network 9 also includes service management system (Service Management System SMS) 13, which includes service management and creation functions. Further the intelligent network 9 includes intelligent peripheral 14 (IP), which includes a function SRF (Special Resource Function) provided with special resources, by means of which are implemented f. ex. voice messages, speech recognition and processing.

The service control point 10 includes the service control centre 11 (Service Control Point SCP). The service centre 11 include logic or service controller 12 (Service Control Function) linked to service control. By means of it implementation of the intelligent network service is managed by giving instructions to other functions (such as SSF, CCF, and SRF) in the manner required by the service, the service control centre 11 normally contains a service database 24 (Service Data Function SDF), which includes among other things customer and network information needed for the services. The service switching centre 10 and service control centre 11 can also be combined to form a service switching and control centre (Service Switching and Control Point SSCP).

The drawings show some of the hardware associated with intelligent network 9. In practice, service switching centre 10 functions as part of a telephone exchange such as a node point or directory area centre. Call switching centre 10 identifies an incoming request from a subscription 1 for an intelligent network 9 and transmits the request for this need to other components of the intelligent network. The components of the intelligent network 9 are in connection with each other by means of joint bus signaling (YKM) and Intelligent network protocol (manufacturer specific).

In the payment service system according to the invention the service controller 12 of the service control centre 11 includes a payment service unit (MPY) 15, by means of which is performed collection of the customer's identity data and settlement of the payment transaction as is disclosed below in greater detail. The payment service unit is preferably implemented in the form of service logic controlled by software in the control computer of the intelligent network 9.

A list of chargeable services and numbers are arranged in service database 24. This list also includes information about connection data of the service providers, especially the bank or other financial institution account numbers in order to collect service payments. Service database 24 and service units, especially payment service point 15 of this embodiment, which functions under the service controller 12, are set up and maintained by means of the management system 13.

The intelligent network 9 in the payment service system according to the invention and especially the service control centre 11, to which the service controller 12 and the payment service unit 15 thereof belong, are linked to a special communications network, such as payment network 17, by a suitable bus 16. The said payment network 17 is included in dedicated networks connected to the public telecommunications network. Financial institutions 21, 22 23, such as banks and/or credit institutions, are further linked to payment network 17 by communications buses 18, 19, 20. Payments to different financial institutions 21, 22, 23 can be effected via the payment network in accordance with the account numbers or corresponding identity data. The Rahaxi™-service is included in the payment network 17 which generally used in Finland. Rahaxi-service receives the payment order and transmits it to the inter-bank telecommunications network or so called BOLT-network and returns processing information or a notice that payment has been effected (or rejected) to the payment service unit 15.

Service control centre 11 has been preferably linked to payment network 17 by means of a X.25 interface (CCITT recommendation for protocol X.25). Telecommunications between the control point 11 and payment network 17 are carried out in accordance with the SPED protocol defined by the intelligent network supplier. SPED protocol is that defined by the supplier of BASE-24™ software. Rahaxi-service has been implemented by the said software. The interface between each of the financial institutions 21, 22, 23 and payment network 17 is implemented by, for instance, the BOLT network. The payment network includes one or more payment networks which is a service network established jointly by banks and/or financial institutions , and through which, for example, payment terminals in shops are linked to various financial institutions.

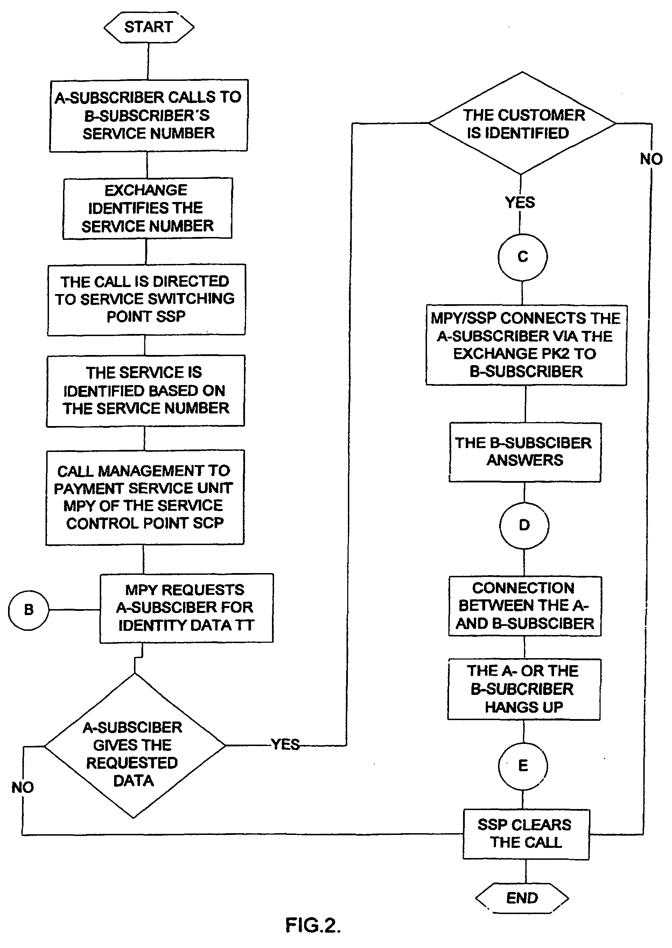

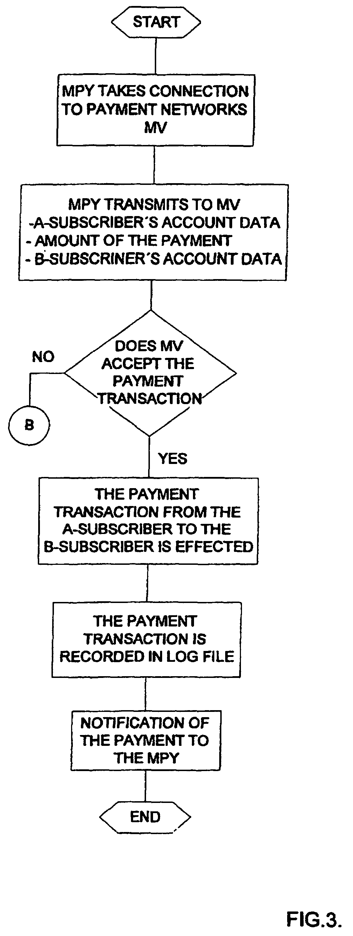

The method to arrange a payment service according to the invention by using the hardware based on the block diagram in Figure 1 is implemented as follows. We also refer to the flowcharts of the figures 2 and 3. When the customer or A-subscriber calls by phone or similar terminal to the service number of the service provider or B-subscriber's number, the call is arranged to be identified based on the service number as a service call in a local exchange 3, and the call is arranged to be routed from the local exchange 3 to intelligent network 9 in the service switching centre 10. Based on the number the service call is checked in the switching centre 10 and the service is identified. In the checking is utilized the service database 24, where from are searched the service information based on the service number. After this, call management is arranged to be assigned from the service switching centre 10 to the payment service unit 15 of the service controller 12.

For the payment service unit 15 are arranged two functions to perform: firstly to collect the customer's, or A-suhscriber's identity data and to verify them, and secondly to carry out the payment transaction from the customer's account to the service provider's account.

The following method is followed to improve data security of payments in a telenetwork and to avoid sending the actual customer data. Firstly the customer is registered as a payment service user in the payment service system. This is implemented such that the customers advises to the operator of the payment service, such as the telecommunications operator, his willingness join to the service. This can be done in writing or electrically via communications network. The customer is then asked for his bank account number or a corresponding, such as the card number, like bank or credit card number and validity period thereof, relating to his bank or credit account. The customers will also normally be asked for other contacting information, such as address data, which is not, however, necessary to implement the payment service.

After having received the customer information above, each customer will receive identity data TT such as a client number and password, which will be securely forwarded by registered mail, for instance. The database 24 linked to payment service unit 15 in service controller 12 will store the customer information, such as bank account number, debit or credit card number and date of expiry, and identity data TT such as client number and password and any other information about the customer in a separate file for each customer.

The password is composed preferably of a set numeric or alphanumeric characters. Alternatively the passwords can be created so that they are formed from a list of non-reusable passwords in a fixed sequence, each password being formed from a range of numeric or alphanumeric characters.

Customers calling a service number will be asked to give the said identity data TT instead of the actual customer information such as bank account or credit card numbers. Collecting the identity data TT takes place through payment service unit 15. Once identity data TT has been obtained, the system retrieves the client number and password from the database 24 and compares them to the identity data TT given, thus verifying their authenticity. Should the identity data TT and any password given by the customer correspond to that on database 24, the payment service unit 15 of the service controller 12 will use the actual customer information or account data proper in SDF 24 to effect payment as shown below.

Collection of identity data TT requested from the customer is arranged to take place in the payment service unit 15 as follows. When the call management has been assigned to the payment service unit 15, this has been arranged to give instructions to the switching centre 10 of sending to the A-subscriber a message, in which is requested to send the identity data TT, such as the client number and the password, and possibly information related to the amount to be paid, such to notify relating to the service the monetary amount of the transaction to be paid. However, it is possible that the sum to be paid for the service is determined in advance and a fixed one, whereby there is not necessarily need to notify the monetary amount separately, but the same can be given forward automatically. The service switching centre 10 is arranged at the same time into a state of readiness to receive information given by the A-subscriber. A-subscriber inputs the identity data and any other information into his terminal 1.

In the use of the A-subscriber should be most preferably a telephone provided with tone frequency dial signaling, so that the information requested can be transmitted securely from the terminal 1 to the service switching centre 10 and further into the payment service unit 15. The service switching centre 10 is arranged to receive, by a tone frequency dial signal receiver or a like, the incoming information from the A-subscriber as tone frequency dial signals.

The service switching centre is further arranged to notify the received A-subscriber identity data TT and the possible monetary amount for the transaction to the payment service unit 15 of the service controller 12. In case the A-subscriber does not give the identity data TT or the given information is not received the service switching centre 10 clears the connection. However, the A-subscriber can be requested to give the identity data TT at least once again.

After having received, checked and accepted the A-subscriber identity data TT the payment service unit 15 is arranged to effect the transaction at point C of the flow chart of the figure 2 in the manner shown in the flow chart of the figure 3. The transaction is carried out as follows. The payment service unit 15 contacts the payment network 17 via the bus 16. A-subscriber's client information such as the account numbers are retrieved from the service database 24 by means of the identity data TT. Correspondingly from the service database are retrieved also the B-subscriber's account numbers relating to the service number. The account numbers of the A-subscriber and the B-subscriber, direction of the transaction as well as information about the monetary amount corresponding to the service are transmitted as a suitable data message to the payment service in the payment networks 17. This is most preferably carried out such, that after the connection has been established between the payment service unit 15 and the payment network 17, the payment service unit 15 is adapted to function as a payment terminal. In practice, this means that in the payment service unit 15 is started an application software, which is adapted to imitate a payment terminal in order to effect the transaction.

The payment terminal is, for instance, a to cash registers of a store connected payment terminal known as such, which is in a connection to the payment network via a telecommunications bus and by which concerning purchases made in a store by means of a bank and/or credit card the transaction is effected to a payment service in the payment network, such Rahaxi™-service in the payment network. Payment is debited from the customer's bank or credit card account in the financial institution concerned.

Once a request for the transaction with the related information has been forwarded from the payment service unit 15 to payment network 17, the payment network 17 is adapted to give an answer, by which is indicated whether the transaction has been accepted or rejected. In case the answer is a rejection, the transfer of the account informations of the A-subscriber and the B-subscriber both the information about the monetary amount to be paid from the payment service unit 15 to the payment network 17 is repeated at least once, and the attempt to carry out the transaction is repeated in the manner described above.

After the transaction has been effected in the payment service unit 15 and the same has received a response of acceptance from the payment network 17, the customer's or A-subscriber's call is adapted to be routed to B-subscriber's number, where from the customer receives the service desired. The accepted transactions are arranged to be recorded in a log file of the payment service unit 15 for the sake of confirmation. The log file is located in, for example, database 24.

Alternatively, the transaction can be effected by means of the payment service unit 15 after carrying out a chargeable service call in the point E of the flow chart of the figure 2 instead of the point C disclosed earlier. The transaction is carried out as follows. The customer's call is routed basing to service number to the service switching centre 10 of the intelligent network 9, where the offered service is identified basing to the service number. After this, the call is connected to the payment service unit 15. The customer's or A-subscriber identity data TT is collected, checked and accepted as described above, but the sum to be paid is left open. At this stage, the A-subscriber's call is connected to the B-subscriber or to number of the service provider. The payment service unit 15 is left to wait for the call to end (A- or B-subscriber hangs up) and for charge information. Cost of a call or the charge information depends, for example, on the length of the call and on the predetermined time unit charge of the service. When the call ends to the payment service unit 15 is given from the service switching centre 10 the charge information and the transaction is effected in accordance with flow chart of the in Figure 3 disclosed above.

Further alternatively the transaction can be effected by the payment service unit 15 during a chargeable service call in the point D of the flow chart of the Figure 2 instead of the points C and E disclosed earlier. The transaction is carried out as follows. Based on the service number the customer's call is routed to the service switching centre 10 of the intelligent network IN 9, where the offered service is identified based on the service number. The customer's or A-subscriber's identity data TT is collected, checked and accepted as described above, and again the sum payable is left open. After this the call is connected to the service provider (B-subscriber answers) f.ex. to obtain information about the services, such as costs thereof, there after the call is transferred back to the payment service unit 15. By means of the payment service unit 15 is arranged to be effected transaction of the service call from the customer's account to the account related to the service of the service provider, as described above and illustrated in the flow chart of the figure 3, there after the customer's call is arranged to be reconnected to the service number from which the service already paid is received.

The invention has described above mostly by referring to one of its preferred embodiment, but it is clear, that the invention can applied in many different ways within the scope of inventive idea defined by the attached claims.

## Claims

1. A method of charging customers in real time for services provided via a telecommunications network comprising:
an intelligent network (9) in which identity data of customers and charge information of provided services are stored, said services being identified based on their associated service numbers, and
a payment network (17),
**characterized in that** the method comprises the steps of:
storing, in the intelligent network (9), account data of the customers in connection with said stored identity data,
establishing a connection from a calling customer to a given service, said calling customer having called the service number associated with said given service,
identifying, with a payment service unit (15) arranged in connection with a service switching center (10) of the intelligent network (9), the calling customer,
retrieving, with the payment service unit (15), a stored charge information of the given service and a stored account data of the identified calling customer,
forwarding the retrieved charge information of the given service and the retrieved account data of the calling customer from the intelligent network (9) to the payment network (17), and
effecting a transaction by transferring a monetary amount specified by the forwarded charge information from an account specified by the forwarded account data of the calling customer to an account specified by a provider of the given service.

2. The method according to the claim 1, **characterized in that** the method further comprises the steps of:
collecting customer information comprising account data, such as bank and/or credit card number, from a customer,
providing the customer an identity data comprising an identification and one or more passwords,
storing the collected customer information and the corresponding identity data into a customer file in a database (24) arranged in connection with the payment service unit (15),
delivering the identity data to the customer, and
performing said step of identifying the calling customer by requesting and verifying the identity data of the calling customer.

3. The method according to the claim 2, **characterized in that** the passwords to be provided to the customer consist of a set of passwords in a fixed sequence, and **in that** said requesting the identity data of the calling customer is performed by requesting the identification of the calling customer and a password next in said fixed sequence.

4. The method according to the claim 2 or 3, **characterized in that** said verifying the identity data of the calling customer is performed by searching, after having received the requested identity data of the calling customer, the database (24) for a corresponding identity data in order to verify that the received identity data is correct.

5. The method according to any of the preceding claims, **characterized in that** accepted transactions are recorded in a log file for confirmation.

## Patentansprüche

1. Verfahren zum Belasten von bzw. in Rechnung stellen an Kunden in Echtzeit für Dienste, welche über ein Telekommunikationsnetz geliefert werden, welches aufweist:
ein intelligentes Netzwerk (9), in welchem Identitätsdaten von Kunden und Belastungsinformation bzw. Zahlungsinformation für gelieferte Dienste gespeichert sind, wobei die Dienste basierend auf ihren damit verbundenen Dienst- bzw. Service-Nummern identifiziert werden, und
ein Zahlungsnetzwerk (17),
**dadurch gekennzeichnet, dass** das Verfahren die Schritte aufweist:
Speichern von Kontodaten des Kunden in dem intelligenten Netzwerk (9) in Verbindung mit den gespeicherten Identitätsdaten,
Erstellen einer Verbindung von einem anrufenden Kunden zu einem gegebenen Dienst, wobei der anrufende Kunde die Dienst- bzw. Service-Nummer, welche mit dem gegebenen Dienst verbunden ist, angerufen hat,
Identifizieren des anrufenden Kunden mit einer Zahlungsservice-Einheit (15), welche in Verbindung mit einem Dienst-Schaltzentrum (10) des intelligenten Netzwerks (9) angeordnet ist,
Herausholen einer gespeicherten Belastungsinformation des gegebenen Dienstes und gespeicherter Kontodaten des identifizierten, anrufenden Kunden mit der Zahlungsservice-Einheit (15),
Weiterleiten der herausgeholten Belastungsinformation für den gegebenen Dienst und der herausgeholten Kontodaten des anrufenden Kunden aus dem intelligenten Netzwerk (9) an das Zahlungsnetzwerk (17), und
Bewirken bzw. Auslösen einer Transaktion durch Übertragen eines Geldbetrages, welcher durch die weitergeleitete Belastungsinformation spezifiziert ist, von einem Konto, welches durch die weitergeleiteten Kontodaten des anrufenden Kunden spezifiziert ist, an ein Konto, welches durch einen Provider bzw. Lieferanten des gegebenen Dienstes spezifiziert ist.

2. Verfahren nach Anspruch 1, **dadurch gekennzeichnet, dass** das Verfahren ferner die Schritte aufweist:
Sammeln von Kundeninformation, welche die Kontodaten aufweist, wie z.B. Bank und/oder Kreditkartennummer eines Kunden,
Liefern von Identitätsdaten, welche eine Identifikation und ein oder mehrere Passwörter aufweisen, an den Kunden, Speichern der gesammelten Kundeninformation und der entsprechenden Identitätsdaten in einem Kunden-File in einer Datenbank (24), welche in Verbindung mit der Zahlungsservice-Einheit (15) angeordnet ist,
Liefern der Identitätsdaten an den Kunden, und
Ausführen des Schrittes des Identifizierens des anrufenden Kunden durch Anfordern und Verifizieren der Identitätsdaten des anrufenden Kunden.

3. Verfahren nach Anspruch 2, **dadurch gekennzeichnet, dass** die Passwörter, welche dem Kunden zu liefern sind, aus einem Satz von Passwörtern in einer festen Reihenfolge bestehen, und dass das Anfordern der Identitätsdaten des anrufenden Kunden durch Anfordern der Identifikation des anrufenden Kunden und eines Passwortes, welches das nächste in der festgelegten Sequenz ist, ausgeführt wird.

4. Verfahren nach Anspruch 2 oder 3, **dadurch gekennzeichnet, dass** das Verifizieren der Identitätsdaten des anrufenden Kunden durch Durchsuchen der Datenbank (24) nach entsprechenden Identitätsdaten durchgeführt wird, um zu verifizieren, dass die empfangenen Identitätsdaten korrekt sind, nachdem die angeforderten Identitätsdaten des anrufenden Kunden erhalten wurden.

5. Verfahren nach einem der vorausgegangenen Ansprüche, **dadurch gekennzeichnet, dass** akzeptierte Transaktionen in einem Log- bzw. Block-File zur Bestätigung aufgezeichnet werden.

## Revendications

1. Procédé permettant de facturer à des clients en temps réel des services fournis dans un réseau de télécommunications, le procédé comprenant :
un réseau intelligent (9) dans lequel sont enregistrées des données relatives à l'identité de clients et des données de facturation pour des services fournis, lesdits services qui sont identifiés sur la base de leurs numéros de services associés, et un réseau de paiement (17),
**caractérisé en ce que** le procédé comprend les étapes consistant à :
enregistrer, dans le réseau intelligent (9), des données de compte clients en connexion avec lesdites données d'identité enregistrées ;
établir une connexion entre un client qui appelle et un service donné, ledit client qui appelle ayant appelé le numéro de service associé au dit service donné ;
identifier, au moyen d'une unité de service de paiement (15) agencée en connexion avec un centre de commutation de services (10) du réseau intelligent (9), le client qui appelle ;
récupérer, au moyen de l'unité de service de paiement (15), des données de facturation enregistrées du service donné et des données de compte enregistrées du client identifié qui appelle ;
transmettre les données de facturation récupérées du service donné et les données de compte récupérées du client qui appelle, depuis le réseau intelligent (9) vers le réseau de paiement (17) ; et
effectuer une transaction en transférant une somme d'argent spécifiée par les données de facturation transmises, depuis un compte spécifié par les données de compte transmises du client qui appelle vers un compte spécifié par un fournisseur du service donné.

2. Procédé selon la revendication 1, **caractérisé en ce que** le procédé comprend en outre les étapes consistant à :
collecter des informations client comprenant des données relatives à un compte, comme des données bancaires et/ou un numéro de carte de crédit par exemple, d'un client ;
fournir au client des données d'identité comprenant un numéro d'identification et un ou plusieurs mots de passe ;
enregistrer les données client collectées et les données d'identité correspondantes dans un fichier client dans une base de données (24) agencée en connexion avec l'unité de service de paiement (15) ;
fournir les données d'identité au client ; et
exécuter ladite étape d'identification du client qui appelle en demandant et en vérifiant les données d'identité du client qui appelle.

3. Procédé selon la revendication 2, **caractérisé en ce que** les mots de passe qui doivent être fournis au client se composent d'un ensemble de mots de passe suivant une séquence fixe, et **en ce que** ladite demande des données d'identité du client qui appelle est exécutée en demandant l'identification du client qui appelle et un mot de passe qui suit dans ladite séquence fixe.

4. Procédé selon la revendication 2 ou 3, **caractérisé en ce que** ladite vérification des données d'identité du client qui appelle est exécutée en recherchant, après avoir reçu les données d'identité demandées du client qui appelle, dans la base de données (24), des données d'identité correspondantes afm de vérifier que les données d'identité reçues sont correctes.

5. Procédé selon l'une quelconque des revendications précédentes, **caractérisé en ce que** les transactions acceptées sont enregistrées dans un fichier journal pour confirmation.
